(19) Europäisches Patentamt
European Patent Office
Office européen des brevets

(11) **EP 0 785 611 B1**

(12) **EUROPEAN PATENT SPECIFICATION**

(45) Date of publication and mention
of the grant of the patent:
**09.05.2007 Bulletin 2007/19**

(51) Int Cl.:
*H02J 3/01* (2006.01)    *H02M 1/00* (2007.01)

(21) Application number: **97100345.4**

(22) Date of filing: **10.01.1997**

(54) **Electric power apparatus**

Stromversorgungsvorrichtung

Appareil d'alimentation de puissance électrique

(84) Designated Contracting States:
**DE FR GB IT**

(30) Priority: **12.01.1996 JP 2069196**

(43) Date of publication of application:
**23.07.1997 Bulletin 1997/30**

(73) Proprietor: **CANON KABUSHIKI KAISHA**
**Tokyo (JP)**

(72) Inventor: **Asayama, Atsushi**
**Shimomaruko, Ohta-ku,**
**Tokyo 146 (JP)**

(74) Representative: **TBK-Patent**
**Bavariaring 4-6**
**80336 München (DE)**

(56) References cited:
WO-A-95/33301          GB-A- 2 211 035
US-A- 4 472 672        US-A- 4 816 982
US-A- 5 134 355

• SEBASTIAN J ET AL: "AN OVERVIEW OF POWER FACTOR CORRECTION IN SINGLE-PHAE OFF-LINE POWER SUPPLY SYSTEMS" PROCEEDINGS OF THE INTERNATIONAL CONFERENCE ON INDUSTRIAL ELECTRONI CONTROL AND INSTRUMENTATION. (IECON), BOLOGNA, SEPT. 5 - 9, 1994 SPECIAL SESSIONS, SIGNAL PROCESSING AND CONTROL, vol. 3, no. CONF. 20, 5 September 1994 (1994-09-05), pages 1688-1693, XP000526792 INSTITUTE OF ELECTRICAL AND ELECTRONICS ENGINEERS ISBN: 0-7803-1329-1

• HISAHITO ENDO ET AL: "A HIGH-POWER-FACTOR BUCK CONVERTER" PROCEEDINGS OF THE ANNUAL POWER ELECTRONICS SPECIALISTS CONFERENCE (PESC), TOLEDO, JUNE 29 - JULY 3, 1992, vol. 2, no. CONF. 23, 29 June 1992 (1992-06-29), pages 1071-1076, XP000369124 INSTITUTE OF ELECTRICAL AND ELECTRONICS ENGINEERS ISBN: 0-7803-0695-3

**EP 0 785 611 B1**

**Description**

The present invention relates to an electric power apparatus to be used for electronic devices such as a copier and a printer.

Document US 4 816 892 discloses an electric power apparatus as described in the preamble of claim 1. In detail, this document discloses an AC to DC power converter comprising a rectifier, a voltage step down converter comprising a switching element and a yoke pole. Furthermore, also a switching control circuit is provided.

Document US 4 472 672 discloses a high power factor switching type battery charger, in which the dual loop feedback system to control the input and output current of the circuit is used. In particular, pulse with modulation is applied in this dual feedback loop system.

Moreover, document US 3 913 002 discloses power circuits, in which a reference signal which is shaped according to the selector control function with the detected instantaneous power current. In particular, according to one example, a constant load current is achieved except near the zero crossings of the line voltage over a period around such zero crossings.

Distorted waveforms (distorted higher harmonics) on a commercial power supply line may cause erroneous operations of electronic devices. This problem is becoming serious nowadays. In order to suppress generation of such distorted higher harmonics, laws regulating distorted higher harmonics of input current to electronic devices are being established.

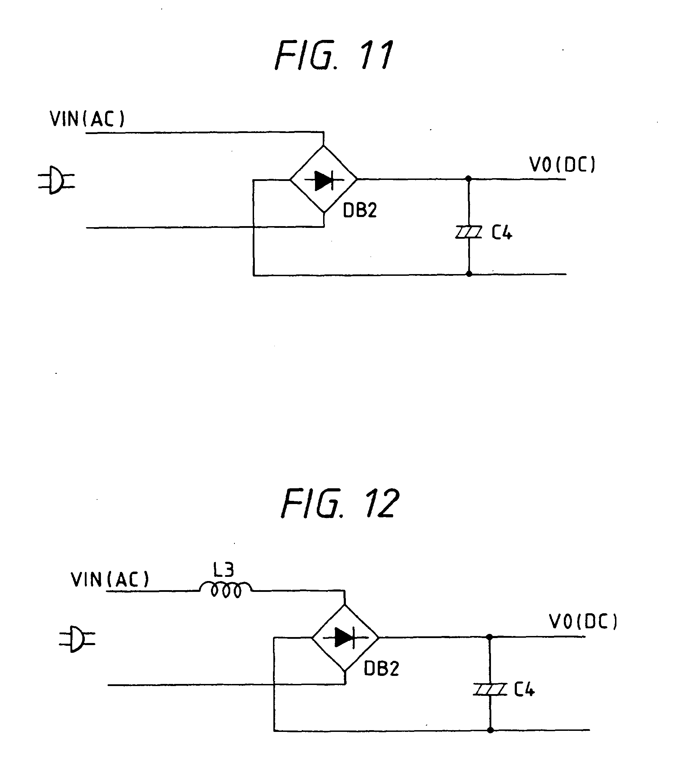

A power supply input circuit (switching power source) for electronic devices generally uses a capacitor input type rectifier circuit such as shown in Fig. 11 having a capacitor C4 on the output side of a diode bridge DB2. In this circuit, current flows from a commercial power source VIN (AC) via the diode bridge DB2 into the capacitor C4 only during the period near at a voltage peak of the commercial power source. Therefore, input current to an electronic device has current peaks which generate many higher harmonics.

Two methods have been proposed in order to sufficiently reduce such higher harmonics.

In one method, as shown in Fig. 12, a choke coil L3 is inserted between a commercial power source VIN (AC) and a diode bridge DB2 of a capacitor input type rectifier circuit, to thereby increase a conduction angle of input current.

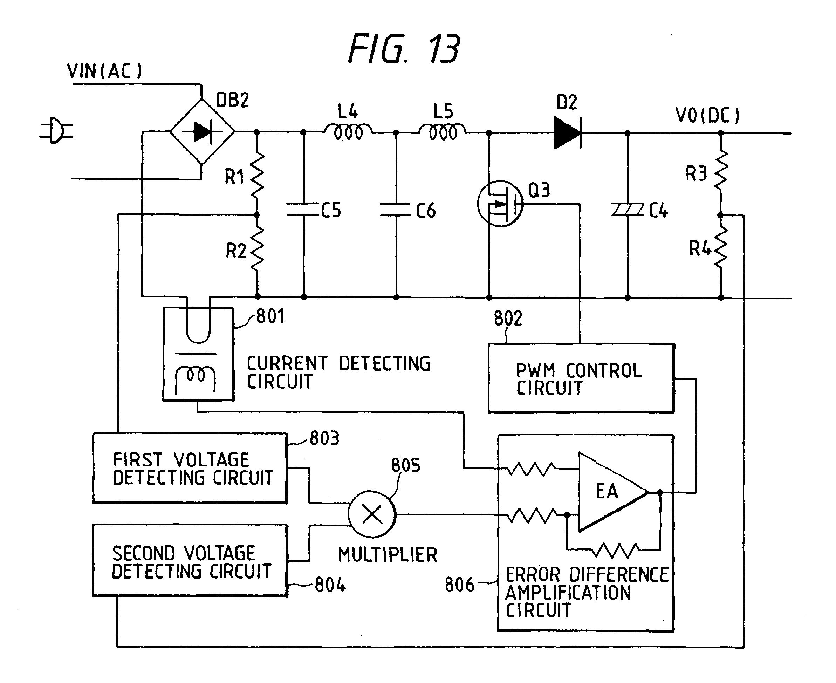

In the other method, as shown in Fig. 13, a power supply input circuit uses a voltage stepup active filter to obtain an input current waveform similar to an input voltage waveform.

In Fig. 13, DB2 represents a diode bridge, D2 represents a flywheel diode (hereinafter simply called a diode), L4 and L5 represent a choke coil, C4, C5, and C6 represent a capacitor, Q3 represents a transistor, R1, R2, R3, and R4 represent a resistor, 801 represents a current detecting circuit, 802 represents a pulse width modulation (PWM) control circuit, 803 represents a first voltage detecting circuit, 804 represents a second voltage detecting circuit, 805 represents a multiplier, and 806 represents an error difference amplification circuit.

In the circuit shown in Fig. 12, the choke coil L3 is required to have inductance of about 10 mH so that the size becomes large. The circuit is therefore difficult to be made compact and light in weight.

Fig. 4 shows a relationship between an input voltage VIN and an output voltage (voltage after commutation or rectification) VO (DC) and Fig. 5 shows a relationship between a load power Po and an output voltage VO, respectively of the power supply input circuit shown in Figs. 11 to 13.

In Figs. 4 and 5, lines at (1) indicate the characteristics of the capacitor input type rectifier circuit shown in Fig. 11, lines at (2) indicate the characteristics of the capacitor input type rectifier circuit with the choke coil L3 shown in Fig. 12, and lines at (3) indicate the characteristics of the circuit using the voltage stepup active filter shown in Fig. 13.

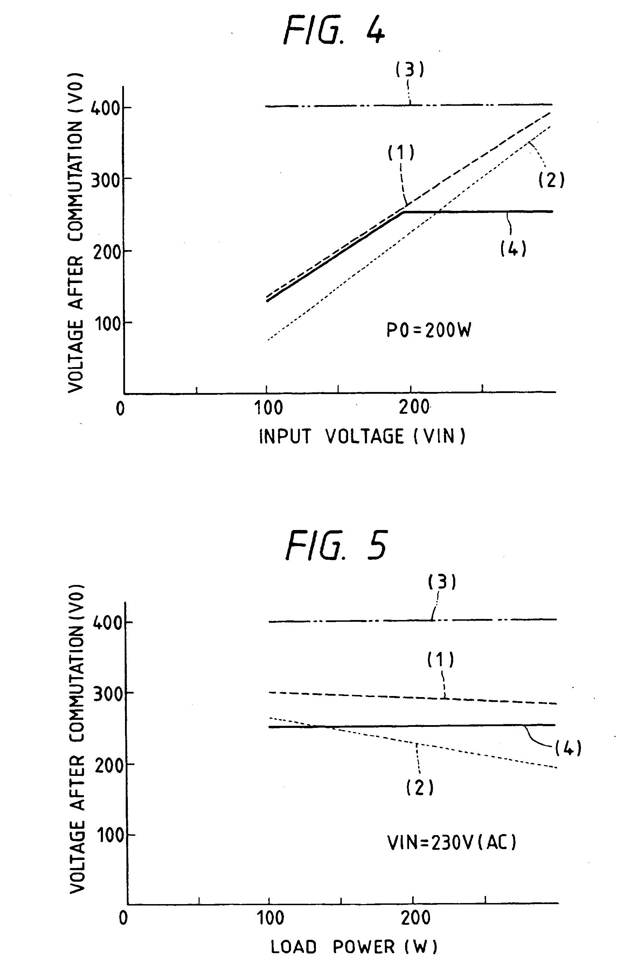

As seen from Figs. 4 and 5, in the circuit with the choke coil L3, if the input current IIN increases because of an increase of the load power Po or a decrease of the input voltage VIN, the output voltage VO is lowered considerably by a voltage drop across the choke coil L3. It is therefore necessary to broaden an operation range of a device such as a DC/DC converter, which is connected at the succeeding stage, to a low input voltage, or to increase the capacitance of the capacitor C4 for the remedy of instant power failure. This increases the manufacture cost and the sizes of the power supply input circuit and the device connected to this circuit such as a DC/DC converter.

In the circuit shown in Fig. 13, a current $\Delta I$ flowing through the choke coil L5 while the transistor Q3 turns on, is given by the following equation (1):

$$\Delta I = (VIN/L5) \times Ton \qquad \ldots (1)$$

where Ton is a period while the transistor Q3 turns on and L5 is an inductance of the choke coil L5.

As seen from this equation (1), in order to reduce a load on the transistor Q3, it is necessary to increase the inductance of the choke coil L5 (generally, the choke coil of about 1 mH is used). The size of the choke coil L5 is therefore required to be large, and the current capacity of the transistor Q3 is required to be sufficiently large. Further, since the choke coil L5 stores electromagnetic energy only while the transistor Q3 turns on, peak current flowing through the transistor Q3 becomes large. Furthermore, in order to use the voltage stepup active filter, the complicated control circuit shown in Fig. 13 is required.

Even with the circuit shown in Fig. 13, there are some problems of a low efficiency, a large size, an increase of noises, a very large cost, and a complicated structure.

It is an object of the present invention to provide an electric power apparatus capable of eliminating the above disadvantages.

It is another object of the present invention to provide an electric power apparatus capable of making a peak value of current flowing through a choke coil or switching element constant during a desired period.

It is another object of the present invention to provide an electric power apparatus capable of setting a constant on-duty during a desired phase period of an input commercial power source.

The above and other objects of the invention will become apparent from the following description and claims when read in conjunction with the accompanying drawings.

**These objects are achieved by an electric power apparatus as set out in claim 1.**

**Further advantageous developments are set out in the dependent claims.**

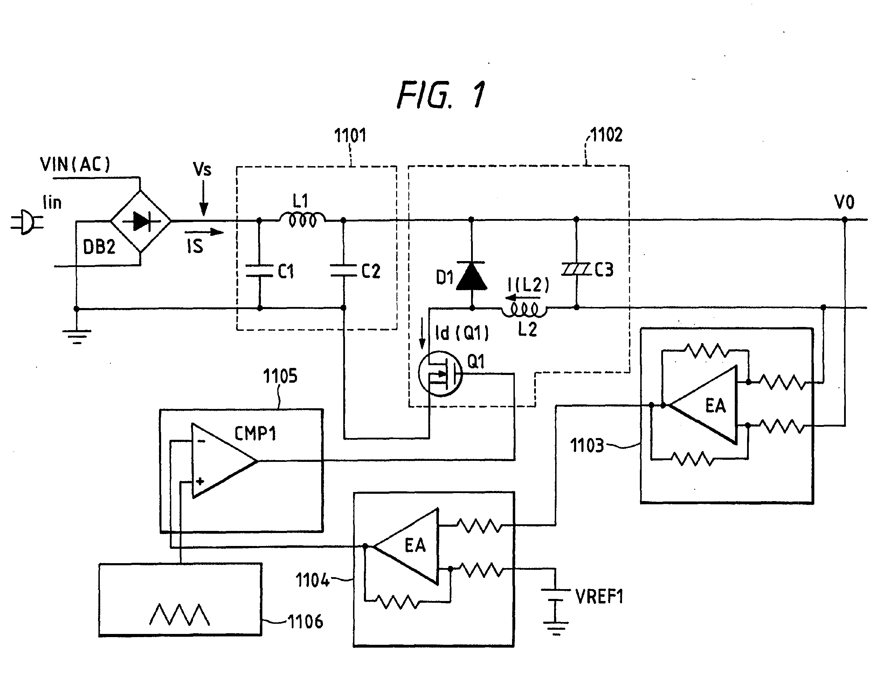

Fig. 1 is a block diagram showing the structure of an electric power apparatus according to a first embodiment of the invention.

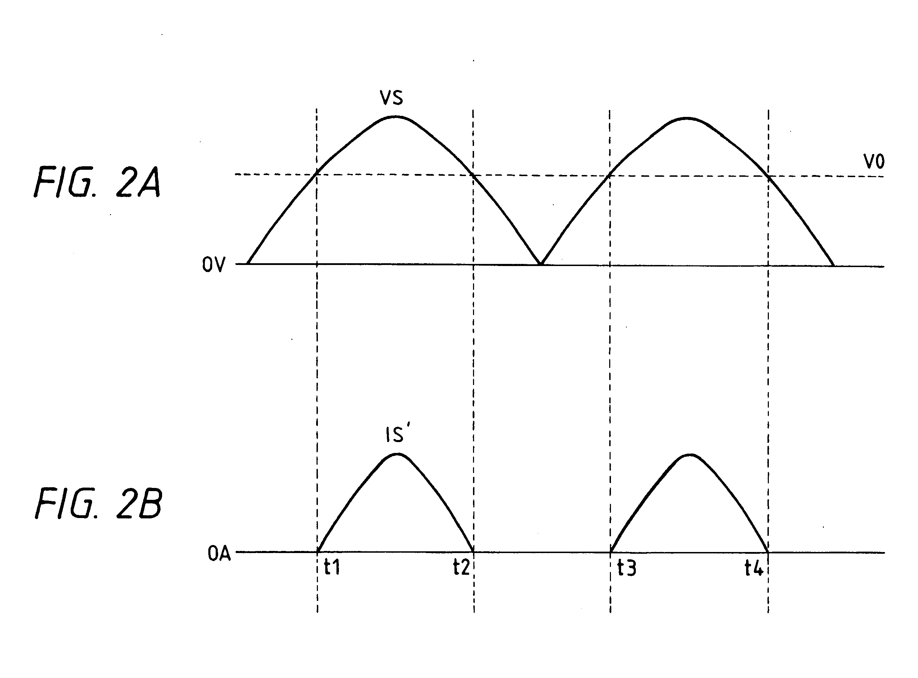

Figs. 2A and 2B are diagrams showing waveforms at each circuit portion of the electric power apparatus shown in Fig. 1.

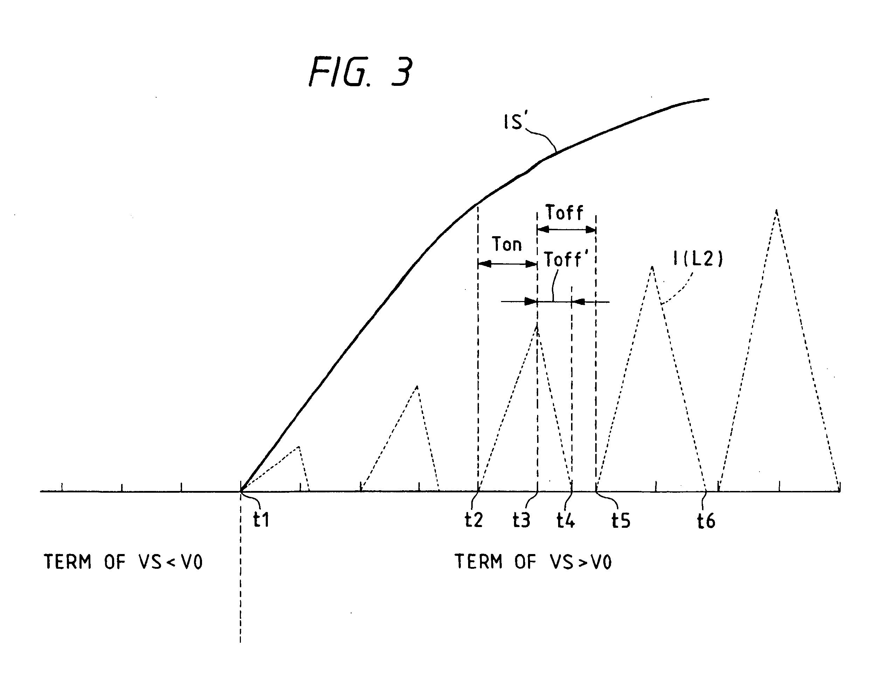

Fig. 3 is a diagram showing waveforms at each circuit portion of the electric power apparatus shown in Fig. 1.

Fig. 4 is a graph showing the characteristics of conventional electric power apparatuses shown in Figs. 11 to 13 and the electric power apparatus shown in Fig. 1.

Fig. 5 is a graph showing the characteristics of conventional electric power apparatuses shown in Figs. 11 to 13 and the electric power apparatus shown in Fig. 1.

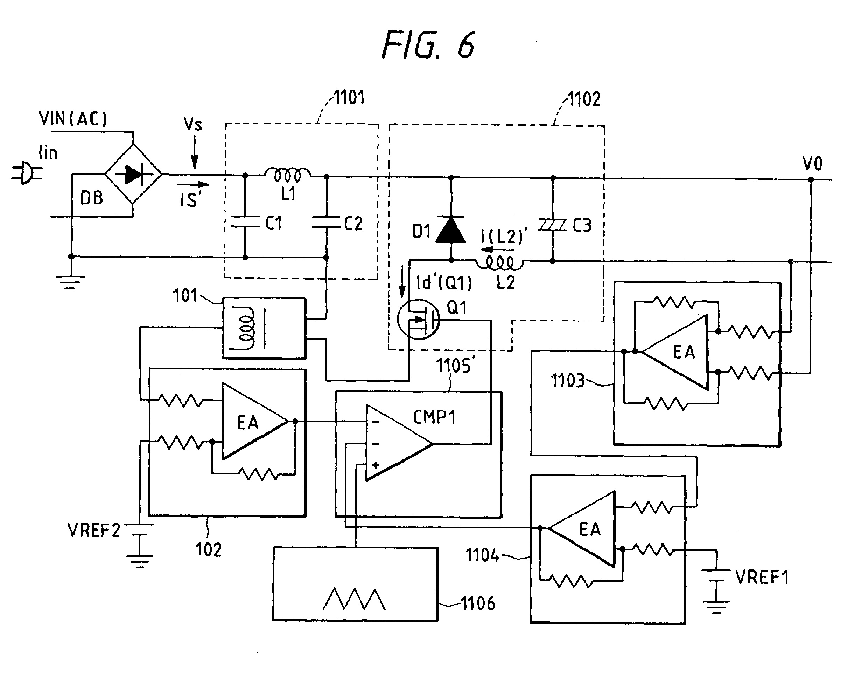

Fig. 6 is a block diagram showing the structure of an electric power apparatus according to a second embodiment of the invention.

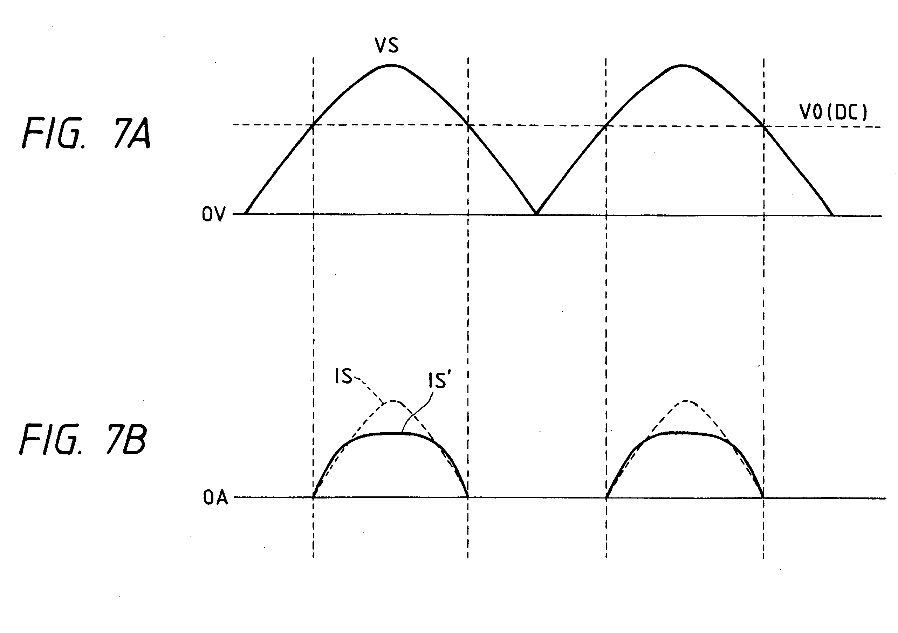

Figs. 7A and 7B are diagrams showing waveforms at each circuit portion of the electric power apparatus shown in Fig. 6.

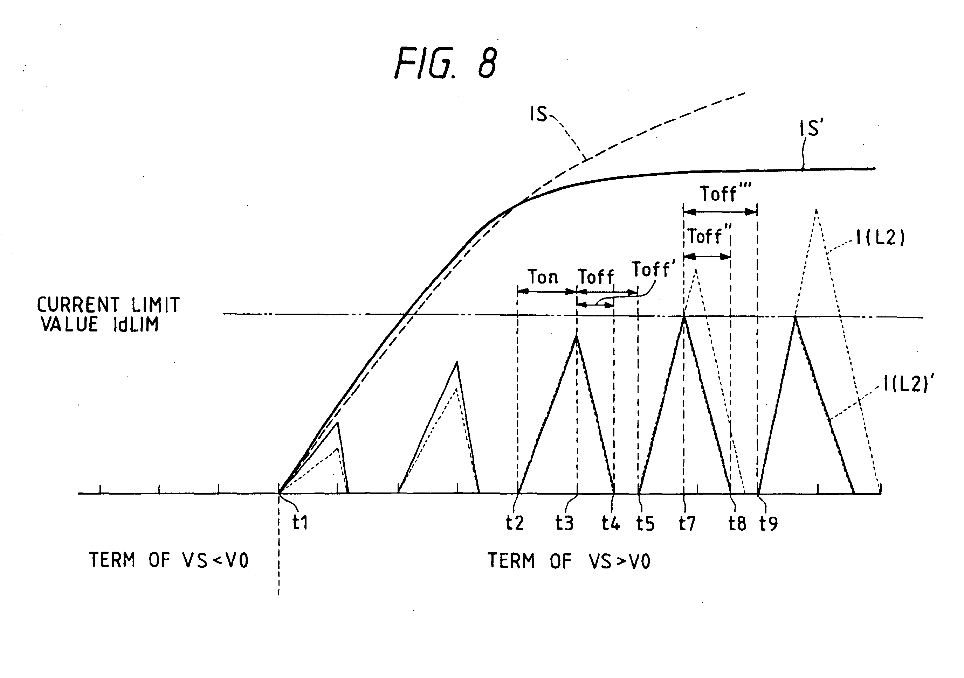

Fig. 8 is a diagram showing waveforms at each circuit portion of the electric power apparatus shown in Fig. 6.

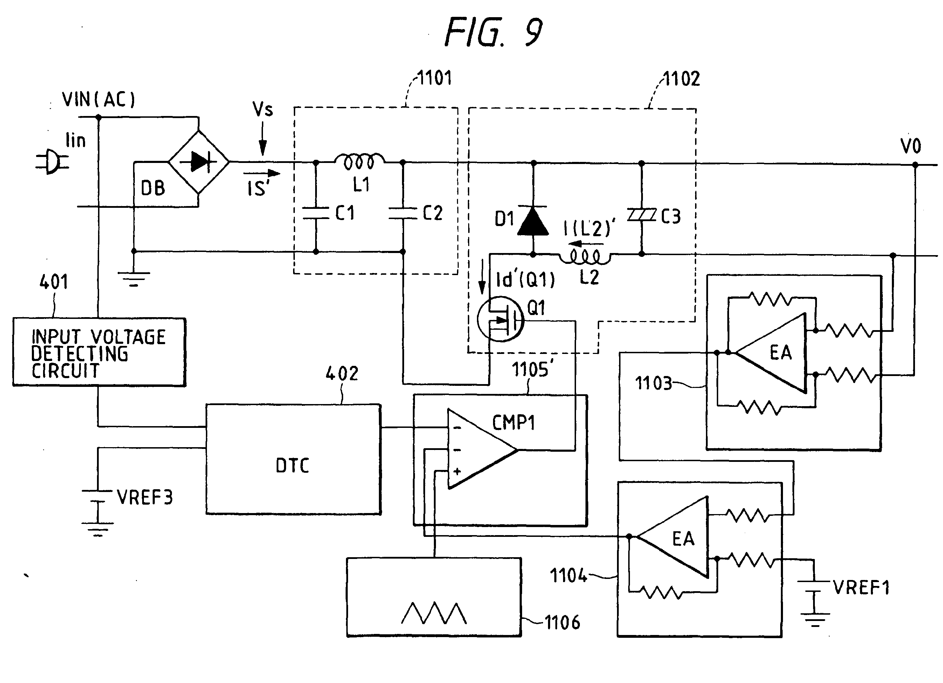

Fig. 9 is a block diagram showing the structure of an electric power apparatus according to a third embodiment of the invention.

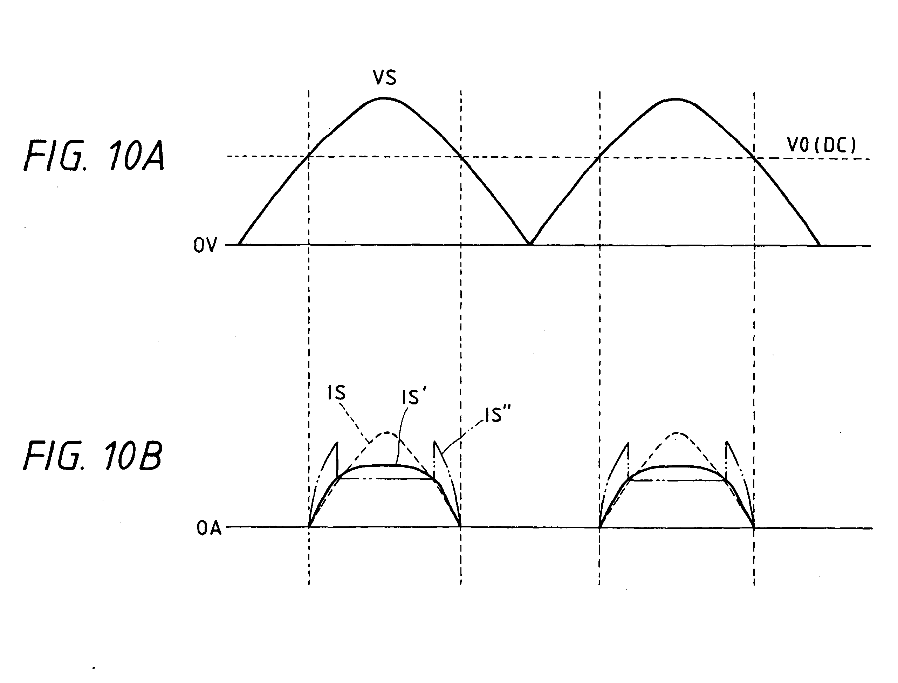

Figs. 10A and 10B are diagrams showing waveforms at each circuit portion of the electric power apparatus shown in Fig. 9.

Fig. 11 is a block diagram showing the structure of a conventional electric power apparatus.

Fig. 12 is a block diagram showing the structure of another conventional electric power apparatus.

Fig. 13 is a block diagram showing the structure of another conventional electric power apparatus.

Embodiments of the invention will be described with reference to the accompanying drawings.

(First Embodiment)

Fig. 1 is a circuit diagram of an electric power apparatus having a voltage stepdown active filer circuit.

Referring to Fig. 1, the voltage stepdown active filter circuit has a diode bridge DB2 which is connected to a commercial power source VIN. An output terminal of the diode bridge DB2 is connected via a low-pass filter 1101 and a voltage stepdown chopper circuit 1102 to a succeeding stage circuit (not shown) such as a DC/DC converter. The low-pass filter 1101 is constituted of capacitors C1 and C2 and a choke coil L1. The voltage stepdown chopper circuit 1102 is constituted of a transistor Q1 such as an FET as a switching element, a flywheel diode (hereinafter simply called a diode) D1, a choke coil L2, and a smoothing capacitor C3. In the voltage stepdown active filter circuit, the inductance of the choke coil L2 is set so that the choke coil L2 can operate in a current discontinuity mode. In this current discontinuity mode, current flows discontinuously through the choke coil L2 even at a maximum load.

An output terminal of the voltage stepdown circuit 1102 is connected to an input terminal of a differential amplifier circuit 1103 whose output terminal is connected to one input terminal of an error amplifier circuit 1104. The other input terminal of the error amplifier circuit 1104 is applied with a reference voltage VREF1, and the output terminal of the error amplifier circuit 1104 is connected to a pulse width modulation (PWM) control circuit 1105. An output voltage VO of the voltage stepdown chopper circuit 1102 is input via the differential amplifier circuit 1103 to the error amplifier circuit 1104, and compared with the reference voltage VREF1. A signal corresponding to a difference between the output voltage VO and reference voltage VREF1 is input via the error amplifier circuit 1104 to the PWM control circuit 1105. The PWM control circuit compares the output signal from the error amplifier circuit 1104 with a triangular wave supplied from a triangular wave generator 1106, and generates a rectangular signal having an on-off ratio corresponding to the output signal from the error amplifier circuit 1104. This rectangular signal is supplied to the transistor Q1 of the voltage stepdown chopper circuit 1102. With this circuit arrangement, the output voltage VO is feedback controlled to have a constant value associated with the reference voltage VREF1.

In the circuit constructed as above, voltage of the commercial power source VIN is rectified by the diode bridge DB2. This rectified voltage VS is input to the low-pass filter 1101 whose output is supplied to the voltage stepdown chopper circuit 1102. In order to make the output voltage VO of the voltage stepdown chopper circuit 1102 have a predetermined value, the transistor Q1 is controlled at a predetermined frequency sufficiently higher than that of the commercial power source VIN and at a predetermined on-duty. With such an operation, as shown in Fig. 2A, as the voltage VS rectified by the diode bridge DB2 gradually rises, current IS' flows as shown in Fig. 2B during the period while the rectified voltage VS becomes larger than the output voltage VO, i.e., during the period between times t1 and t2 and between time t3 and t4. The conduction angle of input current corresponds to the period of VS > VO, and so higher harmonic current can be suppressed by setting the output voltage VO to a proper value (e.g., VO ≤ 250 V for an input voltage of 230 V series).

Fig. 4 shows a relationship between an input voltage VIN and an output voltage VO at a load power Po of 200 W, and Fig. 5 shows a relationship between a load power Po and an output voltage VO at an input voltage VIN of 230 V, respectively indicated by lines (4). As seen from Figs. 4 and 5, the output voltage VO is controlled to be constant even if the load power Po changes and to be constant in the range where the input voltage VIN is larger than a predetermined value (in the example shown in Fig. 4, 190 V). If the input voltage VIN takes the predetermined value or smaller, the transistor Q1 is always controlled to turn on so that the characteristics similar to a conventional capacitor input type rectifier circuit are obtained.

The operation of the power supply input circuit shown in Fig. 1 will be described with reference to Fig. 3 which shows the output current IS' flowing through the diode bridge DB2 and the current **I(L2)** flowing through the choke coil L2.

When it becomes VS > VO at time t1 shown in Fig. 2, current I starts flowing through the choke coil L2. For example, as the transistor Q1 is turned on during a period Ton from time t2 to time t3, the current I (L2) flowing through the choke coil L2 increases. As the transistor Q1 is turned **off** at time t3, the current I (L2) flowing through the choke coil L2 gradually decreases and becomes 0 at time t4 after a period Toff' from time t3. The transistor Q1 is again turned on at time t5 after a period Toff (Toff > Toff') from when the transistor Q1 was turned off at time t3, and the operations after time t2 are repeated. The current I (L2) flowing through the choke coil L2 is defined as in the following.

(a) During a period of VS ≤ VO

The current I (L2) flowing through the choke coil L2 and transistor Q1 while the transistor Q1 is on, is given by:

$$I\ (L2) = 0 \qquad\qquad ...(2)$$

The current I (L2) flowing through the choke coil L2 and transistor Q1 while the transistor Q1 is off, is given by:

$$I\ (L2) = 0 \qquad\qquad ...(2)$$

(b) During a period of VS > VO

The current I (L2) flowing through the choke coil L2 and transistor Q1 while the transistor Q1 is on, is given by:

$$\text{I (L2)} = \{(\text{VS} - \text{VO})/\text{L2}\} \times \text{T} \qquad \dots (3)$$

The current I (L2) increases with time and its peak value is given by:

$$\text{Ip} = \{(\text{VS} - \text{VO})/\text{L2}\} \times \text{Ton} \qquad \dots (4)$$

The current I (L2) flowing through the choke coil L2 and diode D1 while the transistor Q1 is off, is given by:

$$\text{I (L2)} = \text{Ip} - \{\text{VO}/\text{L2} \times \text{T}\} \qquad \dots (5)$$

The current I (L2) decreases with time and the period Toff' when the current I (L2) becomes 0, is given by:

$$\text{Toff}' = \{(\text{VS} - \text{VO})/\text{VO}\} \times \text{Ton} \qquad \dots (6)$$

In this voltage stepdown active filter circuit, the inductance of the choke coil L2 is determined so that Toff' < Toff (Toff is a period while the transistor Q1 is turned off) is satisfied even at a maximum load, i.e., the choke coil L2 can operate in the current discontinuity mode even at a maximum load. In the above manner, all energy accumulated in the choke coil L2 is dissipated at each period.

The input current IS takes a value of the current flowing through the transistor Q1 and filtered with the low-pass filter 1101, and is given by:

$$\text{IS} = \{(1/2) \times \text{Ton} \times \text{Ip}\}/\text{T}$$
$$= \text{Ton}^2 / (2 \times \text{T} \times \text{L2}) \times (\text{VS} - \text{VO}) \qquad \dots (7)$$

The input current waveform is proportional to a difference (VS - VO) between the input voltage (rectified voltage) VS and the output voltage VO. For example, if the rectified voltage VS is a sine wave, the current IS has a waveform partially cut from the sine wave, and by setting a proper value of VO, the conduction angle of the input current can be set as desired.

The on-duty of the transistor Q1 is preferably set as short as possible so long as all energy accumulated in the choke coil L2 can be dissipated. The on-duty is also preferably set in accordance with a load power of the power supply input circuit using the embodiment rectifier circuit or in accordance with the input current to the rectifier circuit.

As described so far, in the voltage stepdown active filter circuit, the conduction angle of the input current can be set as desired by setting the reference voltage VREF1 to a proper value (by setting the rectified voltage VO to a proper value). Accordingly, higher harmonics can be suppressed by using a circuit structure simpler than those shown in Figs. 11 to 13.

The voltage stepdown active filter circuit shows at low input voltage the characteristics similar to the capacitor input type rectifier circuit shown in Fig. 4. Therefore, the output voltage can be prevented from being lowered as the load power is increased, as in the case of the circuit shown in Fig. 12. It is therefore unnecessary to broaden the input voltage range of the succeeding stage device, to a low voltage side, and also unnecessary to use a large smoothing capacitor for instant power failure. Further, since the output voltage VO is controlled to be lower than the peak of the input voltage, it is possible to lower an upper limit of the output voltage VO and to narrow the input voltage range of the succeeding stage device, as compared to the capacitor input type rectifier circuit. Accordingly, the succeeding stage device can use low breakdown voltage elements, realizing compact elements, low noises, and low cost.

The voltage across the choke coil L5 of the voltage stepup active filter circuit shown in Fig. 13 is VS, whereas the voltage across the choke coil L1 of the voltage stepdown active filter can be lowered to (VS - VO). Therefore, the inductance of the choke coil L2 can be made small, realizing compact circuit and low cost. The control circuit can be simplified more than the voltage stepup active filter. Since the transistor Q1 is used as a serial element of the rectifier circuit, the rectifier circuit with the transistor Q1 can be used as a rush current limiter circuit. Accordingly, a rush current limiter circuit with a power element such as a triac and a thyrister can be omitted which has been used with a conventional power supply input circuit with a capacitor input type rectifier circuit or a voltage stepup active filter circuit. Since the current circuit becomes simple, noises can be reduced.

(Second Embodiment)

The voltage stepdown active filter circuit is very effective if the output power is about 300 W or smaller. However, if the output power is 300 W or larger, the peak current flowing through the transistor Q1 and other elements becomes too large near at the phase of the input voltage peak. It is therefore disadvantageous in that suitable elements are required to be selected, thereby raising cost and making the circuit difficult to be compact.

Specifically, the input current waveform IS' is proportional to a difference (VS - VO) between the input voltage (rectified voltage) VS and the output voltage VO, because the transistor Q1 is controlled by a constant on-off ratio during the period (50/60 Hz) of a commercial power supply (assuming all energy accumulated in the choke coil L2 is dissipated during the off-period of the transistor Q1). In other words, if the rectified voltage VS is a sine wave, the input current IS' has a waveform partially cut from the sine wave. As the output power is increased, the input current IS' increases proportionally with the output voltage, with the conduction angle being maintained constant. In the voltage stepdown active filter circuit, therefore, current proportional to (VS - VO) flows so that a large current flows at a phase when VS becomes maximum and no current flows at a phase when VS = VO is satisfied. In selecting a suitable element, the current at the maximum VS is required to be considered. If an FET (field effect transistor) is used as the transistor Q1, a power loss of the on-resistance is $I^2 \times R$ where R is an on-resistance and I is current flowing through the transistor Q1 (assuming that the average value of I with time is constant). Therefore, the voltage stepdown active filter circuit having a large difference between the minimum and maximum I values has a large power loss. In selecting a suitable choke coil L2, it is necessary that the choke coil is not subject to magnetic saturation at a large current at the phase when VS becomes maximum. The voltage stepdown active filter circuit having a large difference between the minimum and maximum I (L2) values is disadvantageous in size, cost, and the like.

The second embodiment eliminating such disadvantages will be described.

Fig. 6 is a block diagram showing the electric power apparatus according to the second embodiment of the invention. In Fig. 6, like elements to those shown in Fig. 1 are represented by using identical reference numerals. Different points of the second embodiment shown in Fig. 6 from the first embodiment shown in Fig. 1 are an addition of a current detector circuit 101, and error amplifier circuit 102, and a reference voltage source VREF2 to the structure of the first embodiment shown in Fig. 1.

The current limiter circuit 101 detects the value of current flowing through the transistor Q1 and inputs it to the error amplifier circuit 102. If the detected value is a predetermined value VREF2 or higher, a PWM control circuit 1105' is feedback controlled to limit the on-time of the transistor Q1. In this manner, the peak current flowing at the phase when VS becomes maximum, is limited. The PWM control circuit 1105' is different from the PWM control circuit 1105 shown in Fig. 1 in that it uses a three-input comparator.

Figs. 7A and 7B are diagrams showing voltage and current waveforms of the electric power apparatus of this embodiment. Fig. 7A shows a waveform of the voltage VS, and Fig. 7B shows a relationship between the waveform of the input current IS' and the waveform of the input current IS of the electric power apparatus shown in Fig. 1.

The operation of the electric power apparatus of this embodiment will be described with reference to Fig. 8 which shows changes in the output current IS' from the diode bridge DB and in the current I (L2)' flowing through the choke coil L2. For reference, the input current IS of the electric power apparatus shown in Fig. 1 and the current I (L2) flowing through the choke coil L2 are shown by:broken lines.

When it becomes VS > VO at time t1, shown in Fig. 8, current I (L2)' starts flowing through the choke coil L2. For example, as the transistor Q1 is turned on during a period Ton from time t2 to time t3, the current I (L2)' flowing through the choke coil L2 increases. As the transistor Q1 is turned off at time t3, the current I (L2)' flowing through the choke coil L2 gradually decreases and becomes 0 at time t4 after a period Toff' from time t3. The transistor Q1 is again turned on at time t5 after a period Toff from when the transistor Q1 was turned off at time t3, and the operations after time t2 are repeated.

After the transistor Q1 is turned on at time t5, the current I (L2)' increases, and when the current becomes at time t7 a current limit value idLIM determined from the current detector circuit 101 and VREF2, the PWM control circuit 1105 turns off the transistor Q1. After the transistor Q1 is turned off, the current I (L2)' flowing through the choke coil L2 gradually decreases and becomes 0 at time t8 after a period Toff" from time t7. At time t9 after a period Toff''' after time t7 when the transistor Q1 was turned off, the transistor Q1 is again turned on. Thereafter, the operations as above are repeated.

In the above manner, as compared to the input current IS of the electric power apparatus shown in Fig. 1, the peak current of the input current IS' at the phase when VS becomes maximum can be limited so that large power can be reliably obtained.

The other structure and operation of the electric power apparatus of this embodiment are similar to the first embodiment shown in Fig. 1, and so the description thereof is omitted.

According to the second embodiment of the electric power apparatus, the on-period of the transistor Q1 is shortened only during the period near at the phase when the commercial power supply voltages takes a peak value to perform a constant current control for making current flowing through the transistor Q1 constant. And during the period at other phases, a constant voltage control is performed to make the rectified voltage constant. In this manner, the peak current value can be reduced without reducing a total control power. Low cost and small size of the transistor Q1, flywheel rectifier element D1, and choke coil L1 can therefore be realized. Furthermore, it is possible to realize the voltage stepdown active filter circuit which is small and cost effective and can supply a large power compatible with an increased consumption power of a copier, a printer, and the like.

(Third Embodiment)

Next, the third embodiment of the invention will be described with reference to Fig. 9 and Figs. 10A and 10B. Fig. 9 is a block diagram showing the electric power apparatus according to the third embodiment of the invention. In Fig. 9, like elements to those shown in Fig. 1 are represented by using identical reference numerals. Different points of the third embodiment shown in Fig. 9 from the first embodiment shown in Fig. 1 are an addition of an input voltage detector circuit 401, a maximum pulse width limiter circuit (dead time control circuit, hereinafter called a DTC) 402, and a reference voltage source VREF3 to the structure of the first embodiment shown in Fig. 1.

The input voltage detector circuit 401 detects an input voltage, and during a period while the detected voltage is larger than a predetermined value VREF3, the DTC 402 is operated to limit the on-period of the transistor Q1 to a predetermined value Tdtc. As the value Tdtc is gradually reduced, the input current waveform IS' shown in Fig. 10B changes to the input current waveform IS". By selecting a proper value Tdtc, the input current waveform IS' or IS" can be selectively used.

In an electric power apparatus with a single power source, it is preferable to select the input current waveform IS'.

In an electric power apparatus with a voltage stepdown active filter circuit, the on-period of a switching transistor is shortened only during the period near at the phase while a commercial input voltage takes a peak value to perform a constant current control for making the current flowing through the transistor constant, and at the other phase, a constant voltage control is performed to make the rectified voltage constant. It is therefore possible to prevent a low efficiency of the electric power apparatus to be otherwise caused by a complicated circuit structure of the apparatus, a bulky size of the apparatus, an increase of noises, and a large cost.

**Claims**

1.  An electric power apparatus comprising:

    a rectifier circuit (**DB2**) for rectifying an input AC voltage (**VIN**);
    a voltage stepdown circuit (**1102**) for lowering a voltage (**VS**) rectified by said rectifier circuit, said voltage stepdown circuit including a choke coil (**L2**) and a switching element (**Q1**);
    a switching control circuit (**1105; 1105'**) for controlling the switching element at a frequency sufficiently higher than the frequency of the AC voltage so as to discontinuously flow current through the choke coil;
    a detector circuit (**101**) for detecting current flowing through the choke coil or the switching element (**Q1**); and
    a control circuit for executing a constant current control and a constant voltage control;

    **characterized by**
    an output voltage control circuit (**1103**) for controlling an output voltage (**VO**) of said voltage stepdown circuit to have a predetermined value lower than a peak value of the AC voltage; and
    a limiter circuit for limiting the on-time of the switching element by said switching control circuit (**1105; 1105'**), in accordance with an output of said detector circuit,
    wherein the control circuit is adapted to execute the constant current control for making current flowing through the choke coil or the switching element constant, during a period near at the phase while the AC voltage takes a peak value, and at the other phase, to execute a constant voltage control for making an output (**VO**) of said voltage stepdown circuit constant.

**2.** An electric power apparatus according to claim 1, **characterized in that** said limiter circuit is adapted to limit the on-time so as to make a peak value of current flowing through the choke coil or the switching element constant during a period near at the phase while the AC voltage takes a peak value.

**3.** An electric power apparatus according to claim 1, **characterized in that** said limiter circuit is adapted to limit the on-time of the switching element during a period near at the phase while the AC voltage takes a peak value.

**4.** An electric power apparatus according to claim 1, **characterized in that** said limiter circuit is adapted to limit a maximum value of the on-time of the switching element in accordance with a phase of the input AC voltage.

**5.** An electric power apparatus according to claim 1, **characterized in that** said control circuit is adapted to shorten an on-time of the switching element (**Q1**) during the period near at the phase while the AC voltage takes a peak value.

**Patentansprüche**

**1.** Elektrische Stromversorgungsvorrichtung, mit
einer Gleichrichterschaltung (DB2) zur Gleichrichtung einer zugeführten Wechselspannung (VIN),
einer zur Herabsetzung der von der Gleichrichterschaltung gleichgerichteten Spannung (VS) vorgesehenen Spannungs-Tiefsetzstellerschaltung (1102) mit einer Drosselspule (L2) und einem Schaltelement (Q1),
einer Schaltsteuerschaltung (1105; 1105') zur Steuerung des Schaltelements mit einer zur diskontinuierlichen Hindurchführung eines Stroms durch die Drosselspule ausreichend höheren Frequenz als die Frequenz der Wechselspannung,
einer Detektorschaltung (101) zur Erfassung des über die Drosselspule (L2) oder das Schaltelement (Q1) fließenden Stroms, und
einer Steuerschaltung zur Durchführung einer Konstantstromsteuerung und einer Konstantspannungssteuerung,
**gekennzeichnet durch**
eine Ausgangsspannungs-Steuerschaltung (1103) zur Steuerung der Ausgangsspannung (VO) der Spannungs-Tiefsetzstellerschaltung auf einen unter einem Spitzenwert der Wechselspannung liegenden vorgegebenen Wert, und
eine Begrenzerschaltung zur Begrenzung der Einschaltzeit des Schaltelements **durch** die Schaltsteuerschaltung (1105; 1105') in Abhängigkeit vom Ausgangssignal der Detektorschaltung,
wobei die Steuerschaltung dahingehend ausgestaltet ist, dass während einer Zeitdauer in der Nähe der Phase, bei der die Wechselspannung einen Spitzenwert annimmt, die Konstantstromsteuerung zur Konstanthaltung des über die Drosselspule oder das Schaltelement fließenden Stroms, und bei einer anderen Phase die Konstantspannungssteuerung zur Konstanthaltung der Ausgangsspannung (VO) der Spannungs-Tiefsetzstellerschaltung durchgeführt werden.

**2.** Elektrische Stromversorgungsvorrichtung nach Anspruch 1, **dadurch gekennzeichnet, dass** die Begrenzerschaltung zur dahingehenden Begrenzung der Einschaltzeit ausgestaltet ist, dass der Spitzenwert des über die Drosselspule oder das Schaltelement fließenden Stroms während einer Zeitdauer in der Nähe der Phase konstant gehalten wird, bei der die Wechselspannung einen Spitzenwert annimmt.

**3.** Elektrische Stromversorgungsvorrichtung nach Anspruch 1, **dadurch gekennzeichnet, dass** die Begrenzerschaltung zur Begrenzung der Einschaltzeit des Schaltelements während einer Zeitdauer in der Nähe der Phase, bei der die Wechselspannung einen Spitzenwert annimmt, ausgestaltet ist.

**4.** Elektrische Stromversorgungsvorrichtung nach Anspruch 1, **dadurch gekennzeichnet, dass** die Begrenzerschaltung zur Begrenzung eines Maximalwertes der Einschaltzeit des Schaltelements in Abhängigkeit von einer Phase der zugeführten Wechselspannung ausgestaltet ist.

**5.** Elektrische Stromversorgungsvorrichtung nach Anspruch 1, **dadurch gekennzeichnet, dass** die Steuerschaltung zur Verkürzung der Einschaltzeit des Schaltelements (Q1) während der Zeitdauer in der Nähe der Phase, bei der die Wechselspannung einen Spitzenwert annimmt, ausgestaltet ist.

**Revendications**

1. Dispositif d'alimentation électrique comprenant :

    un circuit redresseur (DB2) destiné à redresser une tension alternative d'entrée (VIN) ;
    un circuit d'abaissement de tension (1102) destiné à diminuer une tension (VS) redressée par ledit circuit redresseur, ledit circuit d'abaissement de tension comprenant une bobine d'arrêt (L2) et un élément de commutation (Q1) ;
    un circuit de commande de commutation (1105 ; 1105') destiné à commander l'élément de commutation à une fréquence suffisamment plus élevée que la fréquence de la tension alternative de façon à faire circuler de façon discontinue le courant à travers la bobine d'arrêt ;
    un circuit détecteur (101) destiné à détecter le courant circulant à travers la bobine d'arrêt ou l'élément de commutation (Q1) ; et
    un circuit de commande destiné à exécuter une commande à courant constant et une commande à tension constante ;

    **caractérisé par**
    un circuit de commande de tension de sortie (1103) destiné à commander une tension de sortie (VO) dudit circuit d'abaissement de tension pour présenter une valeur prédéterminée inférieure à une valeur de crête de la tension alternative ; et
    un circuit limiteur destiné à limiter le temps d'état conducteur de l'élément de commutation par ledit circuit de commande de commutation (1105 ; 1105'), conformément à une sortie dudit circuit détecteur,
    où le circuit de commande est conçu pour exécuter la commande à courant constant pour rendre constant le courant circulant à travers la bobine d'arrêt ou l'élément de commutation, durant une période presque à la phase tandis que la tension alternative prend une valeur de crête, et à l'autre phase, pour exécuter une commande à tension constante pour rendre constante une sortie (VO) dudit circuit d'abaissement de tension.

2. Dispositif d'alimentation électrique selon la revendication 1, **caractérisé en ce que** ledit circuit limiteur est conçu pour limiter le temps d'état conducteur de façon à rendre constante une valeur de crête du courant circulant à travers la bobine d'arrêt ou l'élément de commutation durant une période presque à la phase tandis que la tension alternative prend une valeur de crête.

3. Dispositif d'alimentation électrique selon la revendication 1, **caractérisé en ce que** ledit circuit limiteur est conçu pour limiter le temps d'état conducteur de l'élément de commutation durant un intervalle presque à la phase tandis que la tension alternative prend une valeur de crête.

4. Dispositif d'alimentation électrique selon la revendication 1, **caractérisé en ce que** ledit circuit limiteur est conçu pour limiter une valeur maximum du temps d'état conducteur de l'élément de commutation conformément à une phase de la tension alternative d'entrée.

5. Dispositif d'alimentation électrique selon la revendication 1, **caractérisé en ce que** ledit circuit de commande est conçu pour raccourcir un temps d'état conducteur de l'élément de commutation (Q1) durant la période presque à la phase tandis que la tension alternative prend une valeur de crête.

FIG. 1

EP 0 785 611 B1

FIG. 2A

FIG. 2B

EP 0 785 611 B1

FIG. 3

## FIG. 4

## FIG. 5

## FIG. 6

EP 0 785 611 B1

FIG. 7A

VS

V0(DC)

0V

EP 0 785 611 B1

FIG. 7B

IS    IS'

0A

FIG. 8

# FIG. 9

EP 0 785 611 B1

FIG. 10A

FIG. 10B

## FIG. 11

VIN(AC)

VO(DC)

DB2

C4

## FIG. 12

VIN(AC)   L3

VO(DC)

DB2

C4

# FIG. 13

VIN(AC)

DB2

L4 L5 D2 V0(DC)

R1 R3

C5 C6 Q3 C4

R2 R4

CURRENT DETECTING CIRCUIT 801

PWM CONTROL CIRCUIT 802

FIRST VOLTAGE DETECTING CIRCUIT 803

MULTIPLIER 805

EA

SECOND VOLTAGE DETECTING CIRCUIT 804

806 ERROR DIFFERENCE AMPLIFICATION CIRCUIT

EP 0 785 611 B1